# EUROPEAN PATENT SPECIFICATION

(11) **EP 2 270 703 B1**
(45) Date of publication and mention of the grant of the patent: **01.08.2018**
(21) Application number: 10166779.8
(22) Date of filing: 22.06.2010
(51) Int. Cl.: G06F 21/10, G06Q 30/02

(54) **Systems and methods for providing conditional authorization to operate licensed software**
Systeme und Verfahren zur Bereitstellung bedingter Autorisation zum Betrieb von lizenzierter Software
Systèmes et procédés de fourniture d'autorisations conditionnelles pour utiliser des logiciels soumis à licence

(30) Priority: 24.06.2009 US 220080 P
(43) Date of publication of application: 05.01.2011
(73) Proprietor: Uniloc Luxembourg, S.A., 2540 Luxembourg (LU)
(72) Inventor: Etchegoyen, Craig Stephen, Irvine, CA 92612 (US); Mordetsky, Joseph Martin, Irvine, CA 92606 (US)
(74) Representative: Dearling, Bruce Clive

(56) References cited:
- US-A- 5 745 879
- "Technical Details on Microsoft Product Activation for Windows XP", INTERNET CITATION, 13 August 2001 (2001-08-13), XP002398930, Retrieved from the Internet: URL:http://www.microsoft.com/technet/prodt echnol/winxppro/evaluate/xpactiv.mspx [retrieved on 2006-09-14]
- ANONYMOUS: "How Microsoft Product Activation (WPA) Works in Windows XP and Windows Vista", INTERNET CITATION, 10 May 2008 (2008-05-10), pages 1-11, XP002613942, Retrieved from the Internet: URL:http://web.archive.org/web/20080510105 322/http://www.pcbuyerbeware.co.uk/Product Activation.htm [retrieved on 2010-12-10]

## Description

This application claims priority to U.S. Provisional Application 61/220,080, which was filed June 24, 2009, and which is fully incorporated herein by reference.

### Field of the Invention

The present disclosure relates to systems and methods for monitoring usage of licensed software and, more particularly, to systems and methods for providing conditional authorization to a plurality of client devices to install or use licensed software.

### Description of the Related Art

Traditionally, software publishers have generated revenue for their proprietary software through selling licenses to end-users. A typical software license grants an end-user permission to use one or more copies of the software and specifically prohibits certain uses of the software, such as reverse engineering and simultaneous use of the software by multiple users.

Piracy remains an ever-present threat to licensed software. Acts of piracy include mass counterfeiting schemes, loading a single licensed copy of software onto multiple machines, and the mere creation of backup copies. Although software publishers have focused on security measures to prevent software piracy, hackers and pirates typically and eventually find ways to bypass or circumvent these security measures.

Because of the difficulty in preventing software piracy, alternative revenue-generating models have been developed which do not rely upon copy prevention techniques. One such example is advertising-supported software, otherwise known simply as "adware." Adware integrates advertising functions with software and may allow the software to be provided to the end-user at reduced or no cost. In contrast to the traditional license-based revenue model, software publishers benefit from the widespread copying and dissemination of ad-supported software since ad revenue is often based on the number of hits or traffic that the software is capable of generating. Moreover, because income is generated based on the advertisements, developers may be motivated to continue developing, maintaining and upgrading the software product.

Notwithstanding the advantages, adware has been met with complaints that advertisements appearing in connection with the software interfere with or provide unwanted interruptions or distractions from the task at hand. Moreover, there is widespread public distrust of adware, as it is often confused with spyware, malware and other unwanted applications.

Accordingly, it would be desirable to provide software to an end-user in a manner that combines certain benefits of proprietary licensed software and adware, while at the same time providing publishers a way to monitor and measure the usage of their software.

US Patent US 5,745,879 is directed towards a distributed computer system employing a licence management system to account for software usage. This document discloses a management policy having a variety of alternative styles and contexts, wherein each licensed program upon start-up makes a call to a licensed server to check on whether usage is permitted, and the licensed server checks a database of the licences, called product use authorizations, that it administers.

The internet documents:
i) "Technical Details on Microsoft Product Activation for Windows XP" from 13 August 2001 (URL:http://www.microsoft.com/technet/prodt echnol/winxppro/evaluate/xpactiv.mspx); and ii)
ii) "How Microsoft Product Activation (WPA) Works in Windows XP and Windows Vista" from 18 May 2007 (URL:http://web.archive.org/web/20070518132931/http://www.pcbuyerbeware.c o.uk/ProductActivation.htm);
each relate to MicroSoft's Windows Product Activation (WPA) security procedure that restricts copy distribution of shrink-wrapped licensed software.

### SUMMARY

The systems and methods disclosed herein provide conditional authorization to operate licensed software that provide the licensor the desired flexibility and control by monitoring usage and authorization of the software on client devices. Additionally, the systems and methods allow the end-user to choose between paying a license-based or advertisement-based model for installing or using the software. Thus, authorization to install or use the software is conditioned on either compliance with license terms (e.g., paying a license fee) and/or having advertisements displayed on the client device in connection with the software.

Because conditional authorization is tied to a particular client device, as identified by a uniquely identifying device fingerprint, multiple devices within a given household may operate the same software under different models. The identity of client devices installing or operating the software is tracked by associating the device fingerprints that uniquely identify the client devices with the software license identifier. This allows licensors and software publishers to monitor and measure the usage of their software and therefore to also determine the value of any particular software to advertisers.

Moreover, useful demographic and other information may additionally be associated with the client devices so as to enable advertisers to further target a desired user demographic. For example, a software title that attracts millions of male users, ages 18-34, in the United States may be particularly valuable for advertisers who seek to market to that demographic.

In a first aspect of the present invention there is provided a system for granting one or more client devices conditional authorization to operate licensed software, the system in accordance with claim 1.

In another aspect of the present invention there is provided a method for granting one or more client devices conditional authorization to operate licensed software, the method in accordance with claim 8.

In an embodiment, the method comprises generating a device fingerprint that uniquely identifies the client device and obtaining a license identifier associated with the licensed software. The device fingerprint and license identifier is transmitted to a license server and either one of a first or second unlock key is received to enable the client to operate the software. The first unlock key allows the client device to operate the licensed software without displaying advertisements. The second unlock key allows the client device to operate the licensed software only in connection with the display of advertisements.

In a further embodiment, tangible computer-readable media are provided having stored thereon, computer-executable instructions that, if executed by a computing device, cause the computing device to perform the processes disclosed herein. Server-side and client-side applications are separately provided.

A more complete understanding of methods and systems disclosed herein will be afforded to those skilled in the art, as well as a realization of additional advantages and objects thereof, by a consideration of the following detailed description. Reference will be made to the appended sheets of drawings which will first be described briefly.

### BRIEF DESCRIPTION OF THE DRAWINGS

FIG. 1 is a schematic diagram showing one embodiment of a system for granting conditional authorization to operate a licensed software.
FIG. 2 is a schematic diagram showing another embodiment of a system for granting conditional authorization to operate a licensed software.
FIG. 3 is a flow chart showing a process for granting one or more client devices conditional authorization to operate licensed software.
FIG. 4 is a flow chart showing a process for receiving, at a client device, conditional authorization to operate licensed software.

Throughout the several figures and in the specification that follows, like element numerals are used to indicate like elements appearing in one or more of the figures.

### DETAILED DESCRIPTION

The methods and systems disclosed herein provide for conditional authorization to install or operate licensed software. The systems and methods comprise both server-side and client-side components, and one of ordinary skill in the art will find that there are a variety of ways to design a client or server architecture. Therefore, the systems and methods disclosed herein are not limited to a specific client or server architecture, and encompass variations and modifications embodying he inventive systems and methods disclosed herein. An appreciation of the disclosure and many of the attendant advantages may be better understood by reference to the following detailed description of the preferred embodiments.

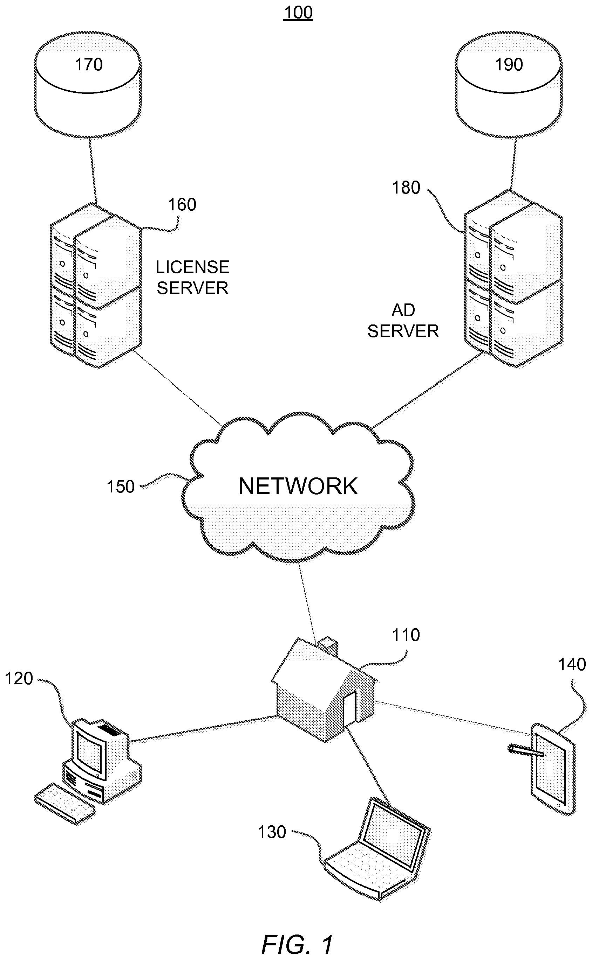

FIG. 1 illustrates one embodiment of a system 100 for granting conditional authorization to a plurality of client devices 120, 130, 140 to install or operate licensed software. Although the example in FIG. 1 illustrates the client devices 120, 130, 140 as being part of a local area network (LAN) 110 associated with a single household, it is understood that they may not be so associated.

The client devices 120, 130, 140 are depicted to be in communication with a license server 160 and an ad server 180 via a communications network 150. The client devices 120, 130, 140 each generate uniquely identifying device fingerprints and determine a license identifier associated with the licensed software before completing installation of the licensed software. The licensed software may be downloaded from a remotely-located server or encoded in a computer-readable media of a data storage device which, when loaded onto the client device, causes the client device to perform the client-side processes and outputs.

During the installation process, client devices 120, 130, 140 send their respective device fingerprints and license identifiers to the license server 160 to determine if granting authorization to the client devices 120, 130, 140 would exceed a predetermined license limit. If the license server 160 determines that granting authorization to a client would not exceed the predetermined license limit, then an unlock key is generated and communicated to the client device. The client device receives and stores the unlock key for future reference by the license server and the user is informed that the request for authorization of its software was successful. The software is allowed to run.

If the license server 160 determines that granting authorization to a client would exceed the predetermined license limit, then the client devices 120, 130, 140 are each given the option of either complying with a license (e.g., paying a license fee) or authorizing the display of advertisements while using the software. This option may be provided by way of a menu screen during installation.

The client devices 120, 130, 140 may be any device or machine capable of communicating with a communications network 150. Preferably, the client device has a processor that is operatively connected to a memory and a display to operate the software. Thus, suitable client devices include game consoles, personal desktop computers, portable laptop computers, server computers, tablet computers, personal digital assistants, mobile phones, wireless communication devices, onboard vehicle computers, and the like.

The communications network 150 may comprise the Internet, a cellular communications network, a satellite communications network, a local area network, or a combination of these or other suitable network.

The license server 160 is configured to receive device fingerprint and license data and ascertain the particular license rights pertaining to the client device. Accordingly, the license server 160 may be in communication with a database 170 comprising stored licensed rights corresponding to a plurality software licenses and device fingerprints. The information in the database 170 permits the license server 160 to ascertain whether a particular device fingerprint corresponding to a client device is covered under a license to the software. The information in the database 170 further permits the license server 160 to ascertain the number of different device fingerprints which have been authorized to install or operate the licensed software.

The ad server 180 is configured to receive ad instructions directly from either or both of the license server 160 or the client devices 120, 130, 140. In response to received ad instructions, the ad server 180 delivers advertisements or ad rendering data to the appropriate client devices 120, 130, 140. Thus, in a preferred embodiment, the ad instructions are associated with the device fingerprint so as to enable to ad server 180 to deliver the ad or ad rendering data to the appropriate client device.

The ad server 180 may be in communication with a database 190 that stores advertisements or ad rendering data along with ad serving parameters. The database 190 may also store associations between device fingerprints and information characterizing client devices 120, 130, 140, the user operating the client devices 120, 130, 140, or any other information that may be derived from the client devices 120, 130, 140 or user. This information may be used by the ad server to deliver advertisements targeted to the particular characteristics of the user.

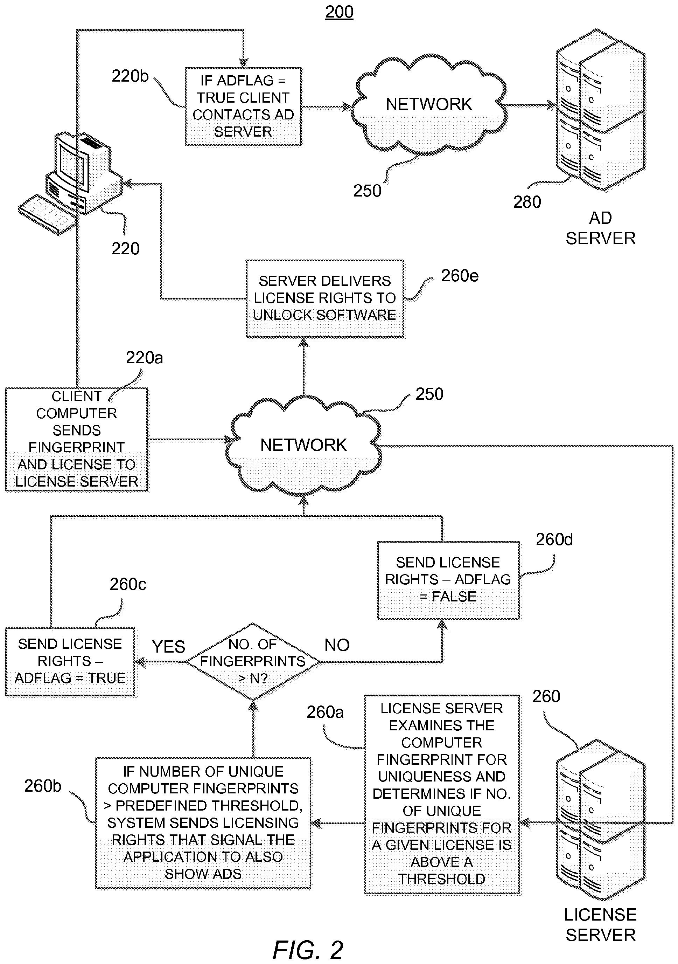

FIG. 2 is a schematic diagram showing another embodiment of a system 200 for dynamically serving advertising to a plurality of client devices. As in FIG. 1, client device 220 is shown to be in communication with both a license server 260 and an ad server 280. The client device 220 generates a uniquely identifying device fingerprint and sends the device fingerprint and a license identifier to the license server 260 via a communications network 250.

The license server 260 determines if the number of unique device fingerprints for a given license identifier exceeds a given threshold 260A. The threshold may be a pre-defined number of unique device fingerprints, as determined by the licensor or software publisher. If the number of unique device fingerprints is greater than a predefined threshold 260B, the license server 260 sends instructions to the client device 220 to display ads in connection with the software 260C. On the other hand, if the number of unique device fingerprints is equal to or less than the predefined threshold, then the license server 260 sends instructions to the client device 220 to install or operate the licensed software without displaying ads 260D.

An unlock code may be delivered to the client device 220 in both instances 260e. The unlock code may be the same or may be different depending on whether or not ad instructions are to be transmitted. If the client device 220 receives an indication that advertisements are to be displayed in connection with the operation of the licensed software, the client device 220 may transmit those instructions 220B to an ad server 280 via a network 250. Alternatively, the ad instructions may be communicated directly from the license server 260 to the ad server 280 via the network 250. Associating the ad instructions with the unique device fingerprint will enable the ad server to deliver ads or ad rendering data to the appropriate client device 220.

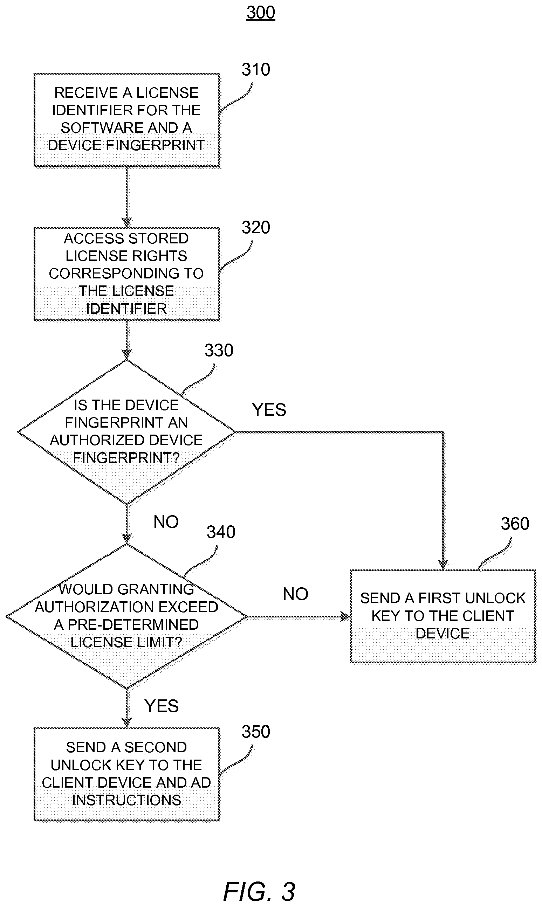

FIG. 3 is a flow chart showing a process 300 for granting one or more client devices conditional authorization to operate licensed software. At 310, the license server receives a license identifier for the software and a device fingerprint from the client device. The license identifier may be a serial number or other data that is uniquely associated with a licensed software or software title.

At 320, the license server accesses stored license rights corresponding to the license identifier. The stored license rights provided the basis for the license server to apply a conditional authorization criteria. Such criteria may be based on the number of different client devices (e.g., device fingerprints) permitted to install or operate a licensed software, a period of time during which the licensed software may be operated, or other measure or parameter of software usage.

In a preferred embodiment, the conditional authorization criteria is based on the number of different client devices permitted to install or operate a licensed software. In accordance with this embodiment, the licensed rights identify a license limit (N) corresponding to the total number of different client devices authorized to operate the licensed software, an actual authorized number (B) of different client devices that have been authorized to operate the licensed software and a listing of such authorized device fingerprints corresponding to the authorized client devices.

At 330, the license server determines if the device fingerprint is an authorized fingerprint. The license server access the database of licensed rights and determines if, for a given license identifier, the device fingerprint is provided on the listing of authorized device fingerprints.

If the device fingerprint is an authorized device fingerprint, then at 360, a first unlock key is transmitted to the client device. The first unlock key may be an unlock code that is configured to allow the licensed software to install or operate on the client device without restrictions (e.g., display of advertisements).

If the device fingerprint is not an authorized device fingerprint, then at 340, the license server determines if granting authorization would exceed a pre-determined license limit by applying an authorization criteria. In one embodiment, the authorization criteria may be a determination of whether granting authorization to the requesting client device would exceed the license limit, as indicated by determine whether B+1≤ N.

If granting authorization would exceed a pre-determined license limit, then at 350, the license server sends a second unlock key to the client device and ad instructions. The ad instructions may be sent to the client device, the ad server, or both.

On the other hand, if granting authorization would not exceed a pre-determined license limit, then at 360, a first unlock key is transmitted to the device and the client device may install or operate the software without having to display advertisements.

In one embodiment, the ad instructions simply instruct the client or ad server to display advertisements whenever the licensed software is used or operated at the client device. In another embodiment, the ad instructions may provide for more dynamic, user-targeted advertisements. For example, the ad instructions may be generated based on information relating to any one or more of the client device, a user operating the client device, the licensed software, and any information sufficient to enable an ad server to select appropriate ads that are appropriately matched with a user's demographic, preferences or interests. For example, while an ad for an upcoming release of an R-rated action movie may appropriate for a target audience comprising males, ages 18-36, it would not be appropriate for a target audience of young children, ages 12 and under.

Information relating to the client device may include information relating to the hardware or software components of the client device, any peripheral devices attached to the client device, and/or performance characteristics relating thereto. Such information may include, for example, type of device (i.e., personal computers, game consoles, handheld mobile devices), processor speed, available memory, resident software, and any other information characterizing the client device of components of the client device as would be relevant in the selection of an appropriate ad. For example, an ad that requires high bandwidth and processing capacity may not be suitable for client devices that have more limited bandwidth and processing capacity.

Information relating to the user operating the client device may include, for example, sex, age, income, education level, geographic location, and any other information which an advertiser would consider relevant to determining its target audience. Highly sensitive information regarding the user is not required since the device fingerprint accomplishes the function of uniquely identifying the client device that is to receive the ads and also associating the particular characteristics and preferences of a user operating the client device with the client device itself. Thus, the user need not input sensitive information such as social security number, credit card information, address, and so forth. The device fingerprint takes the place of such uniquely identifying information.

Information relating to the executable program may include features of the program itself, such as title, revision date, creation date, publisher game rating, etc. Information relating to the user's interactions or plays on the program, such as game state, game plays or levels completed, game scores, characteristics of avatars in the game, total playing time, average playing time, and other relevant information as it relates to the game or avatar in the game.

Information contained in the ad instructions may be matched with ad serving parameters corresponding to an advertisement. This may be done by comparing the information contained in the ad instructions with the serving parameters associated with the ads. The appropriate ads may be selected based on desired match criteria. Certain ads may require a match with information associated with a client fingerprint of 25%, 50%, 75% or more, depending on an advertiser's preferences. Moreover, certain ad serving parameters may be designated as required parameters which must be met (i.e., age of user), whereas certain others designated as desired parameters (i.e., type of game being played). In addition, the ad serving parameters may furthermore relate to the environment in which the ad is to be displayed in the software. For example, if the software is for a game environment, the ad instructions may require that the advertisements be displayed on billboard, a commercial, product placement in a game scene.

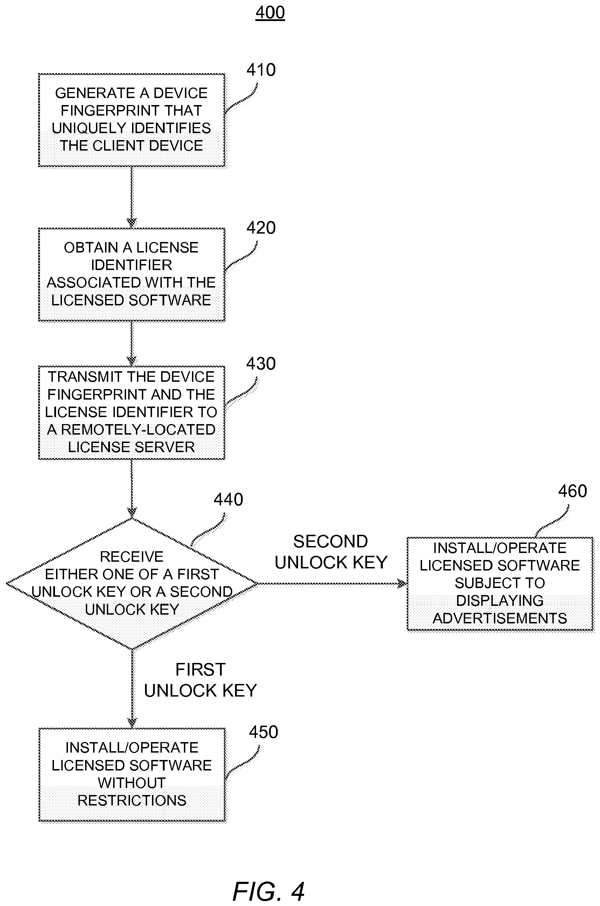

FIG. 4 is a flow chart showing a process 400 for receiving, at a client device, conditional authorization to operate licensed software.

At 410, the client device generates a device fingerprint that uniquely identifies the client device. The device fingerprint may be generated by a stand-alone program or application that is provided separately from the licensed software or an applet running within a web browser on the client device. Alternatively, the device fingerprint may be generated by a program or application which comprises a part of the licensed software or other software.

The device fingerprint application may include a registration routine that collects information regarding the client device by checking a number of parameters which are expected to be unique to the client device environment. The parameters checked may include, for example, hard disk volume name, user name, device name, user password, hard disk initialization date, etc. The collected information may include information that identifies the hardware comprising the platform on which the web browser runs, such as, for example, CPU number, or unique parameters associated with the firmware in use. The collected information may further include system configuration information, such as amount of memory, type of processor, software or operating system serial number, etc. In the alternative, or in addition, the parameters may checked may include virtual machine specifications. Examples of virtual machine specifications may include, but are not limited to, information relating to virtual processors, virtual BIOS, virtual memory, virtual graphics, virtual IDE drives, virtual SCSI drives, virtual PCI slots, virtual floppy drives, virtual serial (COM) ports, virtual parallel (LPT) ports, virtual key board, virtual mouse and drawing tablets, virtual Ethernet card, virtual networking, virtual sound adapter, etc.

Based on the collected information, the device fingerprint application may generate a device fingerprint that is unique for the client device. The device fingerprint may be generated using a combination of user-configurable and non-user-configurable machine parameters as input to a process that results in the device fingerprint, which may be expressed in digital data as a binary number. Each machine parameter is data determined by a hardware component, software component, or data component specific to the device that the unique identifier pertains to. Machine parameters may be selected based on the target device system configuration such that the resulting device fingerprint has a very high probability (e.g., greater than 99.999%) of being unique to the target device. In addition, the machine parameters may be selected such that the device fingerprint includes at least a stable unique portion up to and including the entire identifier, which has a very high probability of remaining unchanged during normal operation of the target device. Thus, the resulting device fingerprint should be highly specific, unique, reproducible and stable as a result of properly selecting the machine parameters.

The device fingerprint application may also operate on the collected parameters with one or more algorithms to generate the device fingerprint. This process may include at least one irreversible transformation, such as, for example, a cryptographic hash function, such that the input machine parameters cannot be derived from the resulting device fingerprint. Each device fingerprint, to a very high degree of certainty, cannot be generated except by the suitably configured application operating or otherwise having had access to the same field security device for which the device fingerprint was first generated. Conversely, each identifier, again to a very high degree of certainty, can be successfully reproduced by the suitably configured application operating or otherwise having access to the same field security device on which the identifier was first generated.

The device fingerprint application may operate by performing a system scan to determine a present configuration of the field security device. The application may then select the machine parameters to be used as input for generating the unique device fingerprint. Selection of parameters may vary depending on the system configuration. Once the parameters are selected, the application may generate the identifier.

Further, generating the device fingerprint may also be described as generating a device fingerprint and may entail the sampling of physical, non-user configurable properties as well as a variety of additional parameters such as uniquely generated hashes and time sensitive values. Physical device parameters available for sampling may include, for example, unique manufacturer characteristics, carbon and silicone degradation and small device failures.

In addition to the chip benchmarking and degradation measurements, the process for generating a device fingerprint may include measuring physical, non-user-configurable characteristics of disk drives and solid state memory devices. Each data storage device has a large variety of damage and unusable data sectors that are nearly unique to each physical unit. The ability to measure and compare values for damaged sectors and data storage failures provides a method for identifying storage devices.

Device parameter sampling, damage measurement and chip benchmarking make up just a part of device fingerprinting technologies described herein. These tools may be further extended by the use of complex encryption algorithms to convolute the device fingerprint values during transmission and comparisons. Such encryption processes may be used in conjunction with random sampling and key generations.

At 420, the client device obtains a license identifier associated with the licensed software. The license identifier may be the serial number or other identifier that is uniquely associated with the licensed software.

At 430, the client device transmits the device fingerprint and the license identifier to a remotely-located license server via a communications network. The process described in connection with FIG. 3 is initiated with the receipt, by the license server, of the device fingerprint and the license identifier.

At 440, the client device receives either one of a first unlock key or a second unlock key. If a first unlock key is received, then at 450, the client device installs or operates the licensed software without restrictions. If a second unlock key is received, then at 460, the client device installs or operates the licensed software subject to displaying advertisements.

While the present invention has been illustrated and described with particularity in terms of preferred embodiments, it should be understood that no limitation of the scope of the invention is intended thereby. Features of any of the foregoing methods and devices may be substituted or added into the others, as will be apparent to those of skill in the art. It should also be understood that variations of the particular embodiments described herein incorporating the principles of the present invention will occur to those of ordinary skill in the art and yet be within the scope of the invention.

As used in this application, the terms "component," "module," "system," and the like are intended to refer to a computer-related entity, either hardware, firmware, a combination of hardware and software, software, or software in execution. For example, a component can be, but is not limited to being, a process running on a processor, a processor, an object, an executable, a thread of execution, a program, and/or a computer. By way of illustration, both an application running on a computing device and the computing device can be a component. One or more components can reside within a process and/or thread of execution and a component can be localized on one computer and/or distributed between two or more computers. In addition, these components can execute from various computer readable media having various data structures stored thereon. The components can communicate by way of local and/or remote processes such as in accordance with a signal having one or more data packets (e.g., data from one component interacting with another component in a local system, distributed system, and/or across a network such as the Internet with other systems by way of the signal).

It is understood that the specific order or hierarchy of steps in the processes disclosed herein in an example of exemplary approaches. Based upon design preferences, it is understood that the specific order or hierarchy of steps in the processes may be rearranged while remaining within the scope of the present disclosure. The accompanying method claims present elements of the various steps in sample order, and are not meant to be limited to the specific order or hierarchy presented.

Moreover, various aspects or features described herein can be implemented as a method, apparatus, or article of manufacture using standard programming and/or engineering techniques. The term "article of manufacture" as used herein is intended to encompass a computer program accessible from any computer-readable device, carrier, or media. For example, computer-readable media can include but are not limited to magnetic storage devices (e.g., hard disk, floppy disk, magnetic strips, etc.), optical discs (e.g., compact disc (CD), digital versatile disc (DVD), etc.), smart cards, and flash memory devices (e.g., Erasable Programmable Read Only Memory (EPROM), card, stick, key drive, etc.). Additionally, various storage media described herein can represent one or more devices and/or other machine-readable media for storing information. The term "machine-readable medium" can include, without being limited to, wireless channels and various other media capable of storing, containing, and/or carrying instruction(s) and/or data.

Those skilled in the art will further appreciate that the various illustrative logical blocks, modules, circuits, methods and algorithms described in connection with the examples disclosed herein may be implemented as electronic hardware, computer software, or combinations of both. To clearly illustrate this interchangeability of hardware and software, various illustrative components, blocks, modules, circuits, methods and algorithms have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention.

## Claims

1. A system (100, 200) for granting one or more client devices (120, 130, 140) conditional authorization to operate licensed software, the system comprising:
a network interface (160, 260) disposed to receive (310) a license identifier for the software and a device fingerprint (220a) that uniquely identifies the client device (110, 120, 130, 220) seeking authorization to operate the software, the device fingerprint identifying one or more of hardware or software components of the client device, any peripheral devices attached to the client device and/or performance characteristics relating thereto including at least one of device type, processor speed and available memory, and wherein the network interface includes a memory holding program instructions operable to:
determine (340) whether granting an authorization to the client device to operate the software would exceed a license limit for that instance of the software;
send (360), in response to determining that the license limit would not be exceeded, a first unlock key to the client device; and
send (350), in response to determining that the license limit would be exceeded, both (i) a second unlock key to the client device (110, 120, 130, 220) to extend licensing of that instance of the software to the client device and (ii) ad instructions (260c) to display one or more advertisements in connection with the operation of the software at the client device and wherein said ad instructions contain information matched with ad serving parameters assessed supportable at the client device having regard to the device fingerprint and wherein the ad serving parameters correspond to a selected advertisement selected for delivery and the ad instructions are arranged to cause such delivery, to the client device, of the selected advertisement based upon the identified hardware or software components of the client device, the hardware or software components of any peripheral devices attached to the client device to which the selected advertisement is to be delivered and/or performance characteristics relating thereto;
and wherein the system includes
a processor, in communication with the network interface and the memory, the processor configured to operate the program instructions.

2. The system of claim 1, further comprising a database (190), accessible by the processor, comprising associations between the device fingerprint and information contained in the ad request.

3. The system of claim 1, further comprising a database (170), accessible by the processor, comprising stored licensed rights indicated by the license identifier.

4. The system of claim 3, wherein the licensed rights identify the license limit (N) of different client devices authorized to operate the licensed software, an actual authorized number (B) of different client devices authorized to operate the licensed software, and a listing of authorized device fingerprints.

5. The system of claim 1, further comprising an ad server (180, 280) in network communication with the processor, the ad server (180, 280) disposed to receive ad instructions to display the one or more advertisements at the client device (110, 120, 130, 220).

6. The system of claim 5, wherein the ad server (180, 280) is in direct communication with the processor.

7. The system of claim 5, wherein the ad server (180, 280) is in indirect communication with the processor via the client device.

8. A method (300) for granting one or more client devices (110, 120, 130, 220) conditional authorization to operate licensed software, the method comprising:
receiving (310), at a server (160, 260), a license identifier for the software and a device fingerprint (220a) that uniquely identifies a client device (110, 120, 130, 220) seeking authorization to operate the software, the device fingerprint identifying one or more of hardware or software components of the client device, any peripheral devices attached to the client device and/or performance characteristics relating thereto including at least one of device type, processor speed and available memory;
determining (340) whether granting authorization to the client device to operate the software would exceed a license limit for that instance of the software;
sending (360), in response to determining that granting authorization to the client device would not exceed the license limit, a first unlock key to the client device (110, 120, 130, 220); and **characterized by**
sending (350), in response to determining that granting authorization to the client device would exceed the license limit, both (i) a second unlock key to the client device (110, 120, 130, 220) to extend licensing of that instance of the software to the client device and (ii) ad instructions to display one or more advertisements in connection with the operation of the software at the client device and wherein said ad instructions contain information matched with ad serving parameters assessed supportable at the client device having regard to the device fingerprint and wherein the ad serving parameters correspond to a selected advertisement for selected delivery and the ad instructions are further arranged to cause such delivery, to the client device, of the selected advertisement based upon the identified hardware or software components of the client device, the hardware or software components of any peripheral devices attached to the client device to which the selected advertisement is to be delivered and/or performance characteristics relating thereto.

9. The method of claim 8, further comprising accessing stored licensed rights indicated by the license identifier.

10. The method of claim 9, wherein the licensed rights identify the license limit (N) of different client devices authorized to operate the licensed software, an actual authorized number (B) of different client devices authorized to operate the licensed software, and a listing of authorized device fingerprints.

11. The method of claim 10, further comprising determining if the device fingerprint corresponds to one of the listing of authorized device fingerprints.

12. The method of claim 11, wherein determining that granting authorization would not exceed the license limit comprises determining that the device fingerprint corresponds to one of the listing of authorized device fingerprints.

13. The method of claim 11, wherein determining that granting authorization would not exceed the license limit comprises determining that B+1 ≤ N if the device fingerprint does not correspond to one of the listing of authorized device fingerprints.

14. The method of any of claims 8 to 13, wherein the ad instructions are generated based information relating to any one or more of the client device, a user operating the client device, and the licensed software.

15. The method of any preceding claim, wherein the first and second unlock keys are identical and comprise an unlock code that allows the software to be operated or installed at the client device.

## Patentansprüche

1. System (100, 200) zum Erteilen einer bedingten Autorisierung für ein oder mehrere Client-Geräte (120, 130, 140), um lizenzierte Software zu betreiben, wobei das System Folgendes aufweist:
eine Netzwerkschnittstelle (160, 260), die dazu ausgelegt ist, eine Lizenzkennzeichnung für die Software und einen Geräte-Fingerabdruck (220a) zu empfangen (310), der das Client-Gerät (110, 120, 130, 220), das eine Autorisierung zum Betreiben der Software anfordert, eindeutig identifiziert, wobei der Gerätefingerabdruck eine oder mehrere Hardware- oder Software-Komponenten des Client-Geräts, beliebige Peripheriegeräte, die mit dem Client-Gerät verbunden sind bzw. Leistungseigenschaften, die sich darauf beziehen, identifiziert, einschließlich mindestens einem von dem Gerätetyp, der Prozessorgeschwindigkeit und dem verfügbaren Hauptspeicher (Memory), und wobei die Netzwerkschnittstelle einen Hauptspeicher aufweist, der Programmanweisungen enthält, die betriebsfähig sind, um Folgendes durchzuführen:
- Bestimmen (340), ob das Erteilen einer Autorisierung für das Client-Gerät zum Betreiben der Software ein Lizenzlimit für diese Instanz der Software überschreiten würde;
- Senden (360), in Reaktion auf das Bestimmen, dass das Lizenzlimit nicht überschritten würde, eines ersten Entschlüsselungsschlüssels an das Client-Gerät;
und
- Senden (350), in Reaktion auf das Bestimmen, dass das Lizenzlimit überschritten würde, von sowohl (i) einem zweiten Entschlüsselungsschlüssel an das Client-Gerät (110, 120, 130, 220), um die Lizenzierung dieser Instanz der Software auf das Client-Gerät auszuweiten, und (ii) Werbeanweisungen (260c), um eine oder mehrere Werbungen in Verbindung mit dem Betrieb der Software auf dem Client-Gerät anzuzeigen, und wobei die Werbeanweisungen Informationen enthalten, die mit Werbeeinschaltungs-Parametern abgeglichen worden sind, auf die in unterstützbarerer Weise am Client-Gerät zugegriffen wird, die sich auf den Gerätefingerabdruck beziehen, und wobei die Werbeeinschaltungs-Parameter einer ausgewählten Werbung entsprechen, die zur Lieferung ausgewählt worden ist, und wobei die Werbeanweisungen dazu ausgelegt sind, um eine solche Lieferung der ausgewählten Werbung an das Client-Gerät basierend auf den identifizierten Hardware- oder Software-Komponenten des Client-Geräts, den Hardware- oder Software-Komponenten von beliebigen Peripheriegeräten, die mit dem Client-Gerät verbunden sind, an die die ausgewählte Werbung bzw. die darauf bezogenen Leistungseigenschaften geliefert werden sollen, zu veranlassen;
und wobei das System einen Prozessor aufweist, der in Kommunikation mit der Netzwerkschnittstelle und dem Hauptspeicher steht, wobei der Prozessor dazu ausgestaltet ist, die Programmanweisungen zu betreiben.

2. System nach Anspruch 1,
das weiterhin eine Datenbank (190) aufweist, auf die der Prozessor zugreifen kann, die Zuordnungen zwischen dem Gerätefingerabdruck und Informationen aufweist, die in der Werbeanforderung enthalten sind.

3. System nach Anspruch 1,
das weiterhin eine Datenbank (170) aufweist, auf die der Prozessor zugreifen kann, die gespeicherte lizenzierte Rechte aufweist, die durch die Lizenzkennzeichnung angegeben werden.

4. System nach Anspruch 3,
wobei die lizenzierten Rechte das Lizenzlimit (N) der verschiedenen Client-Geräte, die zum Betreiben der lizenzierten Software autorisiert sind, eine tatsächliche autorisierte Anzahl (B) verschiedener Client-Geräte, die zum Betreiben der lizenzierten Software autorisiert sind, und eine Liste der autorisierten Gerätefingerabdrücke identifizieren.

5. System nach Anspruch 1,
das weiterhin einen Werbeserver (Ad-Server) (180, 280) in Netzwerkkommunikation mit dem Prozessor aufweist, wobei der Werbeserver (180, 280) dazu ausgelegt ist, eine oder mehrere Werbungen auf dem Client-Gerät (110, 120, 130, 220) zu empfangen und anzuzeigen.

6. System nach Anspruch 5,
wobei der Werbeserver (180, 182) in direkter Kommunikation mit dem Prozessor steht.

7. System nach Anspruch 5,
wobei der Werbeserver (180, 280) über das Client-Gerät in indirekter Kommunikation mit dem Prozessor steht.

8. Verfahren (300) zum Erteilen einer bedingten Autorisierung für ein oder mehrere Client-Geräte (110, 120, 130, 220), um lizenzierte Software zu betreiben,
wobei das Verfahren Folgendes umfasst:
- Empfangen (310), an einem Server (160, 260), von einer Lizenzkennzeichnung für die Software und einen Gerätefingerabdruck (220a), der ein Client-Gerät (110, 120, 130, 220) eindeutig identifiziert, das eine Autorisierung zum Betreiben der Software anfordert, wobei der Gerätefingerabdruck eines oder mehrere von Hardware- oder Software-Komponenten des Client-Geräts, beliebigen Peripheriegeräten, die mit dem Client-Gerät verbunden sind bzw. darauf bezogene Leistungseigenschaften identifiziert, einschließlich von mindestens einem von dem Gerätetyp, der Prozessorgeschwindigkeit und dem verfügbaren Hauptspeicher;
- Bestimmen (340), ob das Erteilen der Autorisierung an das Client-Gerät, um die Software zu betreiben, ein Lizenzlimit für diese Instanz der Software überschreiten würde;
- Senden (360), in Reaktion auf das Bestimmen, dass das Erteilen einer Autorisierung an das Client-Gerät das Lizenzlimit nicht überschreiten würde, eines ersten Entschlüsselungsschlüssels an das Client-Gerät (110, 120, 130, 220); und **gekennzeichnet durch**
- Senden (350), in Reaktion auf das Bestimmen, dass durch Erteilen der Autorisierung für das Client-Gerät das Lizenzlimit überschritten würde, von sowohl (i) einem zweiten Entschlüssclungsschlüssel an das Client-Gerät (110, 120, 130, 220), um die Lizenzierung dieser Instanz der Software auf das Client-Gerät auszuweiten, und (ii) Werbeanweisungen, um eine oder mehrere Werbungen in Verbindung mit dem Betrieb der Software auf dem Client-Gerät anzuzeigen, und wobei die Werbeanweisungen Informationen enthalten, die mit Werbeeinschaltungs-Parametern abgeglichen worden sind, auf die in unterstützbarer Weise auf dem Client-Gerät zugegriffen wird, die sich auf den Fingerabdruck beziehen, und wobei die Werbeeinschaltungs-Parameter einer ausgewählten Werbung für eine ausgewählte Lieferung entsprechen und die Werbeanweisungen weiterhin dafür ausgebildet sind, um eine solche Lieferung für das Client-Gerät von der ausgewählten Werbung basierend auf den identifizierten Hardware- oder Software-Komponenten des Client-Geräts, den Hardware- oder Software-Komponenten von beliebigen Peripheriegeräten, die mit dem Client-Gerät verbunden sind, an die die ausgewählte Werbung bzw, die darauf bezogenen Leistungseigenschaften geliefert werden sollen, zu veranlassen.

9. Verfahren nach Anspruch 8,
das weiterhin den Zugriff auf gespeicherte lizenzierte Rechte umfasst, die durch die Lizenzkennzeichnung angegeben sind.

10. Verfahren nach Anspruch 9,
wobei die lizenzierten Rechte das Lizenzlimit (N) der verschiedenen Client-Geräte, die zum Betreiben der lizenzierten Software autorisiert sind, eine tatsächliche autorisierte Anzahl (B) verschiedener Client-Geräte, die zum Betreiben der lizenzierten Software autorisiert sind, und eine Liste der autorisierten Gerätefingerabdrücke identifizieren.

11. Verfahren nach Anspruch 10,
das weiterhin das Bestimmen umfasst, ob der Gerätefingerabdruck einem der aufgelisteten autorisierten Gerätefingerabdrücke entspricht.

12. Verfahren nach Anspruch 11,
wobei das Bestimmen, dass das Erteilen der Autorisierung das Lizenzlimit nicht übersteigen würde, das Bestimmen umfasst, dass der Gerätefingerabdruck einem der aufgeführten autorisierten Gerätefingerabdrücke entspricht.

13. Verfahren nach Anspruch 11,
wobei das Bestimmen, dass das Erteilen der Autorisierung das Lizenzlimit nicht übersteigt, das Bestimmen umfasst, dass B + 1 ≤ N gilt, wenn der Gerätefingerabdruck nicht einem der aufgeführten autorisierten Gerätefingerabdrücke entspricht.

14. Verfahren nach einem der Ansprüche 8 bis 13,
wobei die Werbeanweisungen basierend auf Informationen erzeugt worden, die sich auf eines oder mehrere der Client-Geräte, einen Benutzer, der das Client-Gerät betreibt, und die lizenzierte Software beziehen.

15. Verfahren nach einem der vorhergehenden Ansprüche,
wobei der erste und zweite Entschlüsselungsschlüssel identisch sind und einen Entschlüsselungscode aufweisen, der es ermöglicht, dass die Software auf dem Client-Gerät betrieben oder installiert wird.

## Revendications

1. Système d'octroi à un ou plusieurs dispositifs clients (120, 130, 140) d'autorisation conditionnelle pour faire fonctionner un logiciel sous licence, le système comprenant :
une interface réseau (160, 260) disposée pour recevoir (310) un identifiant de licence pour le logiciel et une empreinte de dispositif (220a) qui identifie de manière unique le dispositif client (110, 120, 130, 220) sollicitant l'autorisation pour faire fonctionner le logiciel, l'empreinte de dispositif identifiant un ou plusieurs composants matériels ou logiciels du dispositif client, tout dispositif périphérique rattaché au dispositif client et/ou des caractéristiques de performance en rapport avec celui-ci, comportant au moins élément parmi le type de dispositif, la vitesse du processeur, et la mémoire disponible, et selon lequel l'interface réseau comporte une mémoire stockant des instructions de programme opérables pour :
évaluer (340) si l'octroi d'une autorisation au dispositif client pour faire fonctionner le logiciel ferait dépasser une limite à la licence pour cette instance du logiciel ;
envoyer (360), en réponse à une évaluation que la limite de la licence ne serait pas dépassée, une première clé de déverrouillage au dispositif client ; et
envoyer (350), en réponse à une évaluation que la limite de la licence serait dépassée, à la fois (i) une deuxième clé de déverrouillage au dispositif client (110, 120, 130, 220) pour étendre la licence de cette instance du logiciel au dispositif client, et (ii) des instructions de publicité (260c) pour afficher une ou plusieurs publicités en rapport avec le fonctionnement du logiciel au niveau du dispositif client, et selon lequel lesdites instructions de publicité contiennent des informations correspondant à des paramètres de publicité jugés supportables au niveau du dispositif client ayant égard de l'empreinte du dispositif, et selon lequel les paramètres de publicité correspondent à une publicité choisie retenue pour une livraison et selon lequel les instructions de publicité sont configurées pour effectuer une telle livraison, au dispositif client, de la publicité choisie, sur la base des composants matériels ou logiciels identifiés du dispositif client, des composants matériels ou logiciels de tout dispositif périphérique rattaché au dispositif client auquel la publicité choisie devra être livrée, et/ou des caractéristiques de performances en rapport avec celui-ci ;
selon lequel le système comporte :
un processeur, en communication avec l'interface réseau et la mémoire, le processeur étant configuré pour faire fonctionner les instructions de programme.

2. Système selon la revendication 1, comprenant en outre une base de données (190), accessible par le processeur, comprenant des associations entre l'empreinte de dispositif et les informations contenues dans la demande de publicité.

3. Système selon la revendication 1, comprenant en outre une base de données (170), accessible par le processeur, comprenant des droits de licence stockés indiqués par l'identifiant de licence.

4. Système selon la revendication 3, selon lequel les droits de licence identifient la limite de la licence (N) des différents dispositifs clients autorisés à faire fonctionner le logiciel sous licence, un nombre actuel (B) d'autorisations des différents dispositifs clients autorisés à faire fonctionner le logiciel sous licence, et une liste d'empreintes de dispositifs autorisées.

5. Système selon la revendication 1, comprenant en outre un serveur de publicités (180, 280) en communication réseau avec le processeur, le serveur de publicités (180, 280) étant configuré pour recevoir des instructions de publicité pour afficher la ou les plusieurs publicités au niveau du dispositif client (110, 120, 130, 220).

6. Système selon la revendication 5, selon lequel le serveur de publicités (180, 280) est en communication directe avec le processeur.

7. Système selon la revendication 5, selon lequel le serveur de publicités (180, 280) est en communication indirecte avec le processeur via le dispositif client.

8. Procédé d'octroi à un ou plusieurs dispositifs clients (110, 120, 130, 220) d'autorisation conditionnelle pour faire fonctionner un logiciel sous licence, le procédé comprenant :
la réception (310), au niveau d'un serveur (160, 260), d'un identifiant de licence pour le logiciel et d'une empreinte de dispositif (220a) qui identifie de manière unique un dispositif client (110, 120, 130, 220) sollicitant l'autorisation pour faire fonctionner le logiciel, l'empreinte de dispositif identifiant un ou plusieurs composants matériels ou logiciels du dispositif client, tout dispositif périphérique rattaché au dispositif client et/ou des caractéristiques de performance en rapport avec celui-ci, comportant au moins élément parmi le type de dispositif, la vitesse du processeur, et la mémoire disponible ;
l'évaluation (340) pour savoir si l'octroi d'une autorisation au dispositif client pour faire fonctionner le logiciel ferait dépasser une limite à la licence pour cette instance du logiciel ;
l'envoi (360), en réponse à une évaluation que l'octroi de l'autorisation au dispositif client ne ferait pas dépasser la limite de la licence, d'une première clé de déverrouillage au dispositif client (110,120, 130, 220) ;
le procédé étant **caractérisé par** :
l'envoi (350), en réponse à une évaluation que l'octroi de l'autorisation au dispositif client ferait dépasser la limite de la licence, à la fois (i) d'une deuxième clé de déverrouillage au dispositif client (110, 120, 130, 220) pour étendre la licence de cette instance du logiciel au dispositif client, et (ii) d'instructions de publicité pour afficher une ou plusieurs publicités en rapport avec le fonctionnement du logiciel au niveau du dispositif client, et selon lequel lesdites instructions de publicité contiennent des informations correspondant à des paramètres de publicité jugés supportables au niveau du dispositif client ayant égard de l'empreinte du dispositif, et selon lequel les paramètres de publicité correspondent à une publicité choisie retenue pour une livraison et selon lequel les instructions de publicité sont configurées pour effectuer une telle livraison, au dispositif client, de la publicité choisie, sur la base des composants matériels ou logiciels identifiés du dispositif client, des composants matériels ou logiciels de tout dispositif périphérique rattaché au dispositif client auquel la publicité choisie devra être livrée, et/ou des caractéristiques de performances en rapport avec celui-ci.

9. Procédé selon la revendication 8, comprenant en outre l'accès aux droits de licence stockés indiqués par l'identifiant de licence.

10. Procédé selon la revendication 9, selon lequel les droits de licence identifient la limite de la licence (N) des différents dispositifs clients autorisés à faire fonctionner le logiciel sous licence, un nombre actuel (B) d'autorisations des différents dispositifs clients autorisés à faire fonctionner le logiciel sous licence, et une liste d'empreintes de dispositifs autorisées.

11. Procédé selon la revendication 10, comprenant en outre l'évaluation de savoir si l'empreinte de dispositif correspond à l'une des empreintes de la liste d'empreintes de dispositifs autorisées.

12. Procédé selon la revendication 11, selon lequel l'évaluation que l'octroi de l'autorisation ne ferait pas dépasser la limite de la licence comprend l'évaluation que l'empreinte de dispositif correspond à l'une des empreintes de la liste d'empreintes de dispositifs autorisées.

13. Procédé selon la revendication 11, selon lequel l'évaluation que l'octroi de l'autorisation ne ferait pas dépasser la limite de la licence comprend l'évaluation que B+1≤N si l'empreinte de dispositif ne correspond pas à l'une des empreintes de la liste d'empreintes de dispositifs autorisées.

14. Procédé selon l'une quelconques des revendications 8 à 13, selon lequel les instructions de publicité sont générées sur la base d'informations en rapport avec l'un ou plusieurs éléments quelconques parmi le dispositif client, un utilisateur faisant fonctionner le dispositif, et le logiciel sous licence.

15. Procédé selon l'une quelconque des revendications précédentes, selon lequel les première et deuxième clés de déverrouillage sont identiques et comprennent un code de déverrouillage qui permet au logiciel de fonctionner ou être installé au niveau du dispositif client.
